# EUROPEAN PATENT SPECIFICATION

(11) **EP 3 369 290 B1**
(45) Date of publication and mention of the grant of the patent: **01.06.2022**
(21) Application number: 16790376.4
(22) Date of filing: 03.11.2016
(51) Int. Cl.: H05B 6/06, H05B 6/68

(54) **COOKING APPLIANCE AND METHOD**
KOCHGERÄT UND VERFAHREN
APPAREIL DE CUISSON ET PROCÉDÉ

(30) Priority: 22.01.2016 ES 201630076
(43) Date of publication of application: 05.09.2018
(73) Proprietor: Cata Corporación 2000, S.L., 08570 Torello (ES)
(72) Inventor: ROCA FONTANÉ, Joan, 17007 Girona (ES); BRUGUÉS FONTANÉ, Salvador, 17403 Sant Hilari Sacalm (ES)
(74) Representative: Clarke Modet & Co.
(86) International application number: PCT/EP2016/076535
(87) International publication number: WO 2017/125177

(56) References cited:
- CA-A- 799 427
- US-A- 5 410 129
- US-A1- 2006 254 432
- US-A1- 2015 117 136
- US-A1- 2016 014 849

## Description

### Field of the invention

The present invention refers to an induction cooking appliance featuring accurate control of the temperature in the cooking medium and the temperature in the central portion of the food therein, being specially designed for household and restaurant use.

The present invention also refers to a cooking method associated to cooking appliances.

### Background of the invention

Current cooking techniques increasingly require the use of appliances and utensils which allow more control over the main cooking parameters (time, pressure and temperature), in order to cook food in the optimum conditions for making the most of the quality and organoleptic properties thereof.

One of the easiest ways of controlling temperature consists of using thermometers, by means of which the cooking temperature can be displayed at a given time. However, these utensils do not usually communicate with the cooking appliance, so the temperature control is performed manually, and therefore they do not allow a stable and accurate cooking process which would guarantee food to be cooked correctly.

In other cases, the temperature sensor is embedded in the cooking vessel itself, so as to measure temperature thereof during the cooking process. For example, the document US20150208845A1, shows a cooking vessel having one or more sensors arranged on the base thereof which allow obtaining a mean value of the vessel temperature. This utensil includes a communication module transmitting said value to an outer device (such as a tablet or mobile phone), which in turn sends the necessary instructions to a user for manually adjusting the heat power of the cooking appliance. Therefore, although the vessel temperature is automatically controlled, adjusting thereof is still carried out manually.

In any case, in the known induction cooking appliances, regulating heat power is fundamentally based in controlling the cooking vessel or cooking medium temperature. However, this type of control is not enough for certain types of food which, due to determined particularities thereof, require a specific control both of the cooking medium temperature (water, sauce, soup, oil, etc.), and the inner temperature of the food itself (that is, the temperature at which the food central portion or core is during the cooking process).

Thus, frequently, the cooking process ends without the food inner temperature reaching the optimum point for consumption thereof, or else, once said point has been exceeded.

A cooking appliance according to the prior art is disclosed in any of US2015/117136, US5 410129, US 2006/254432, US2016/014849, and CA 799 427.

The present invention solves the problem previously stated, by means of a cooking appliance and method which allows automatically and accurately regulating heat power according to two different temperatures. From those two temperatures, one of them is associated to the cooking medium inside the cooking vessel, whereas the other is directly associated to the central area or core of the food being submerged either partially or entirely in said cooking medium. This feature allows finishing the cooking process at the right time when the food central area or core reaches the optimum temperature for consumption thereof, irrespective of other factors, as for example the type of cooking medium or the food thickness. Additionally, it allows cooking with the steam that said cooking medium (water, soup, infusions, wines, etc.) may generate, in a controlled manner.

### Description of the invention

The invention is defined by a cooking appliance according to claim 1, a cooking method according to claim 8 and a temperature control device according to claim 9. Dependent claims refer to preferred embodiments.

According to the invention a temperature control device is configured for communicating with the control unit of the cooking appliance, which allows regulating the electric power being supplied by the power unit according to the first and the second temperature values being measured during the cooking process.

The control unit may be programmed by means of a user interface, allowing the user to introduce, among other parameters, the cooking temperature and the temperature of the food which is intended at the end of the cooking process. Thus, the user can program the cooking process for it to be finished when the food central area or core reaches the optimum temperature for consumption thereof, irrespective of other factors (type of cooking medium, food thickness, steam presence, etc.).

These features make the cooking appliance especially suitable for performing the following types of cooking:
- cooking vacuum-packed food by bain-marie dipping;
- cooking food packaged in containers (glass jars, etc.), without vacuum, by dipping them into a water bath;
- cooking food directly dipped into several liquid cooking medium (oils, sauces, soups, water, wines, infusions, ...);
- steam cooking, monitoring the temperature of the cooking liquid.

Likewise, the appliance also allows using the traditional cooking techniques, such as boiling, sautéing, frying, stewing, griddling, etc.

The user interface allows programming the control unit from a button panel provided in the appliance itself, or via Bluetooth from a smartphone or tablet by means of a mobile APP (Android, IOS). As an example, a recipe may be selected from the APP with the cooking parameters being previously defined, send this to the cooking appliance, and then validate it by pushing a button in the appliance so as to start the process. Once this has been started, the application enables the different cooking parameters to be displayed (cooking medium temperature, food temperature, remaining cooking time, etc.).

The cooking appliance of the present invention provides multiples operating options in order to regulate the electric power being supplied to the induction hob (and thus, the heat power being provided to the cooking vessel by said hob), according to the first and second temperature values which are measured during the cooking process.

According to a first operating mode, especially suitable for making the most of the appliance advantages, the user introduces a set point temperature of the cooking medium *T_{1C}* and a set point temperature of the food *T_{2C}*. The control unit compares the first temperature *T₁*, measured by the first probe, with the set point temperature of the cooking medium *T_{1C}*, and increases the electric power which is supplied to the induction hob until the first temperature *T₁* reaches the value of the set point temperature of the cooking medium *T_{1C}*. At that moment, the appliance emits a warning signal (light, sound, through the mobile APP, etc.) so that the user introduces the food into the cooking vessel. Then, the control unit continues adjusting said power so as to keep the first temperature *T₁* stable at the value corresponding to the set point temperature of the cooking medium *T_{1C}*. During the cooking process, the control unit continues comparing the second temperature *T₂*, measured by the second probe, with the set point temperature of the cooking medium *T_{1C}*, until it finally stops the power supply when the second temperature *T₂* reaches the food set point temperature *T_{2C}*. This is a sensitive and stable regulating system, capable of quickly increasing the temperature of the cooking medium, but at the same time controlling it efficiently so that the second temperature *T₂* does not exceed the food set point temperature *T_{2C}*.

According to a second operating mode, the user introduces the set point temperature of the cooking medium *T_{1C}* and the cooking time *t_{C}*. The control unit compares the first temperature *T₁* with the set point temperature of the cooking medium *T_{1C}*, and increases the electric power being supplied to the induction hob, until the first temperature *T₁* reaches the value of the set point temperature of the cooking medium *T_{1C}*. At that moment, the appliance emits a warning signal (light, sound, through the mobile APP, etc.) so that the user introduces the food into the cooking vessel. Once the user has confirmed the food has been introduced (for example, by pushing a button on the appliance), a count-down of the cooking time *t_{C}* starts. Then, the control unit continues adjusting said power so as to keep the first temperature *T₁* stable in the value of the set point temperature of the cooking medium *T_{1C}*. Once the cooking time *t_{C}* has gone by, power supply to the induction hob is cut.

The temperature control device has a design which is especially suitable for making adaptation thereof easier to a great variety of cooking vessels (pans, paella pans, pots, saucepans, etc.). In this sense, so as not to disturb the user, it preferably features wireless communication with the control unit.

According to a preferred embodiment of the temperature control device, the first temperature probe comprises:
- a fastening end fitted to be fixed to the cooking vessel, and configured to establish a physical or wireless communication with the control unit so as to transmit the first and second temperature values;
- a first measuring end having a first temperature sensor configured to measure the first temperature; and
- a first intermediate section that joins the first fastening end with the first measuring end, and that is made of a semi-rigid material which enables it to match the cooking vessel geometry.

The first temperature probe comprises a connection port, for example USB or micro USB, which allows connecting the second temperature probe. In turn, said connection port allows establishing a physical wired communication with the cooking appliance, or with any other electric power supply connector (wall socket, USB or micro USB adapter, laptop computer, etc.), in order to charge the battery of the temperature control device, or to transmit data to another electronic device.

According to a preferred embodiment of the temperature control device, the second temperature probe comprises:
- a connection end fitted to connect to the first temperature probe, preferably to the connection port of said first probe, by means of a USB or micro USB terminal;
- a second measuring end having a second temperature sensor configured to measure the second temperature; and
- a second intermediate section joining the connection end with the second measuring end, and that is made of a flexible or semi-rigid material which allows taking the second measuring end up to the food central area.

In order to make insertion of the second measuring end into the food central area or core easier, the second temperature sensor features a sharp-pointed shape configured to be stuck into the food. According to a second object intended for protection, the present invention refers to a cooking method according to claim 8.

Said cooking method comprises the following steps:
a) place a cooking vessel over a cooking appliance;
b) supply the cooking vessel with hot power;
c) measuring a first temperature *T₁* associated to a cooking medium contained within the cooking vessel;
d) measuring a second temperature *T₂* associated to food, preferably associated to the central area or core thereof, being partially or entirely dipped in the cooking medium; and
e) regulating the heat power according to the values of the first and second temperature *T₁*, *T₂.*

In turn, step e) comprises the steps of:
e.1) introducing a set point temperature of the cooking medium *T_{1C}* in the cooking appliance;
e.2) introducing a food set point temperature *T_{2C}* in the cooking appliance;
e.3) comparing the first temperature *T₁* with the set point temperature of the cooking medium *T_{1C}*;
e.4) increasing heat power until the first temperature *T₁* reaches the set point temperature value of the cooking medium *T_{1C}*;
e.5) adjusting the heat power for keeping the first temperature *T₁* stable in the set point temperature value of the cooking medium *T_{1C}*;
e.6) comparing the second temperature *T₂* with the set point temperature of the cooking medium *T_{1C}*; and
e.7) stopping heat supply when the second temperature *T₂* reaches the value of the food set point temperature *T_{2C}*.

The cooking appliance and method of the present invention allows cooking at "low temperature", wherein "low temperature" should be understood as a temperature being lower than that temperature which would be used in the traditional cooking methods. Therefore, by reducing the cooking temperature with respect to that from traditional cooking, the cooking time is also extended. Thanks to this, the food is cooked in softer and more natural manner, better preserving the properties thereof (nutrients, taste, texture,...), while preventing it from getting burnt or dried up.

### Brief description of the drawings

The following is a brief description of a series of drawings which will help understand the invention better and which specifically refer to an embodiment of said invention presented as a non-limiting example thereof.
Figure 1 shows a perspective view of the cooking appliance of the present invention, according to a first embodiment for a cooking vessel of a pan type.
Figure 2 shows a block diagram of the cooking appliance.
Figure 3 shows a plan top view of the cooking appliance.
Figure 4 shows a plan bottom view of the cooking appliance.
Figure 5 shows a front view of the cooking appliance.
Figure 6 shows a side view of the cooking appliance.
Figure 7 shows a first profile view of the cooking appliance.
Figure 8 shows a second profile view of the cooking appliance.
Figure 9 shows a sectioned view according to the cutting line A-A of figure 3.
Figure 10 shows a perspective view of the first temperature probe.
Figure 11 shows a profile view of the first temperature probe.
Figure 12 shows a front view of the first temperature probe.
Figure 13 shows a top plan view of the first temperature probe.
Figure 14 shows a bottom plan view of the first temperature probe.
Figure 15 shows a perspective view of the second temperature probe.
Figure 16 shows a perspective view of the cooking appliance of the present invention, according to a second embodiment for a cooking vessel of a saucepan type.
Figure 17 shows a perspective view of the cooking appliance of the present invention, according to the first embodiment and in a charging condition.

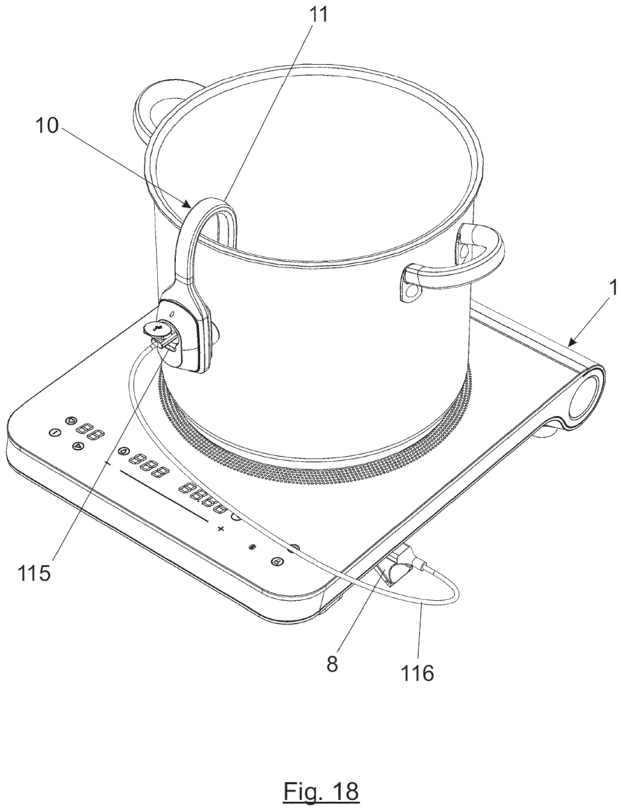

Figure 18 shows a perspective view of the cooking appliance of the present invention, according to the second embodiment and in a charging condition.

### Detailed description of the invention

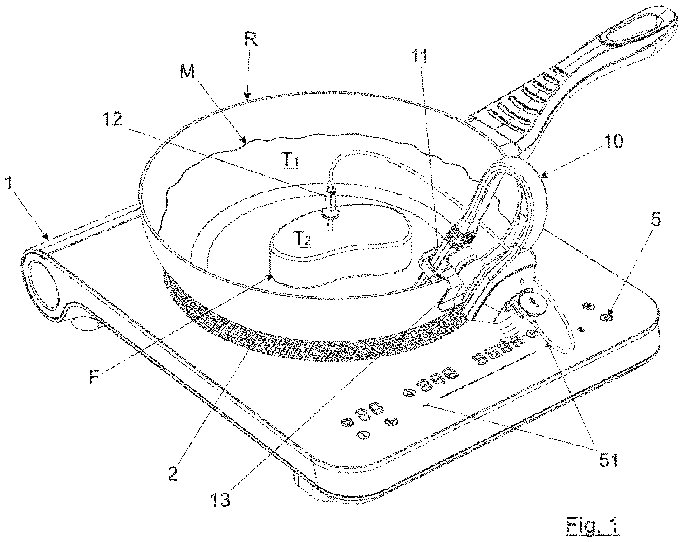

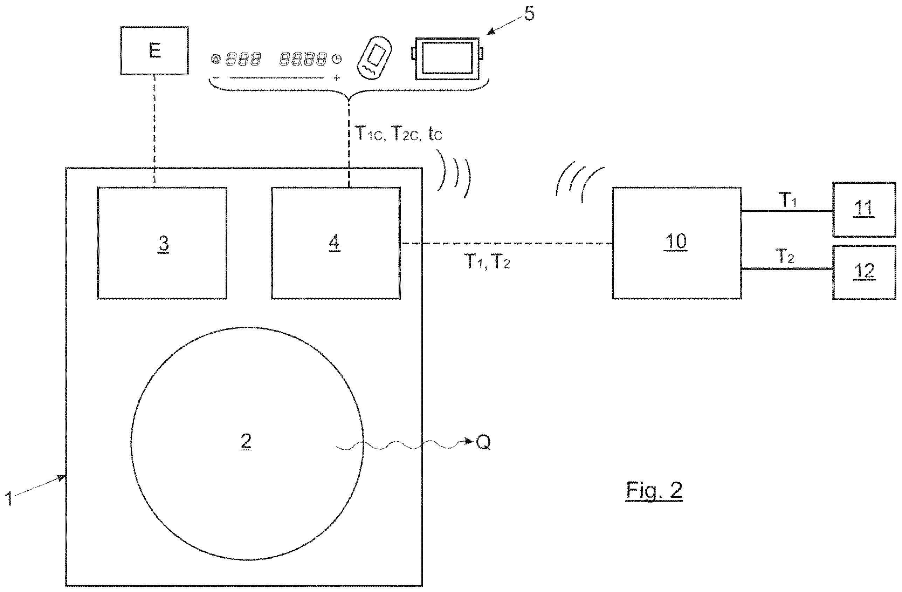

As it can be seen in figures 1 and 2, the cooking appliance (1) of the present invention comprises:
- an induction hob (2) arranged for receiving a cooking vessel (R), in this case being a pan;
- a power unit (3) configured for the induction hob (2) electric power supply (E); and
- a control unit (4) configured for regulating the electric power (E) being supplied by the power unit (3), which can be programmed by means of a user interface (5).

Said appliance (1) additionally comprises a temperature control device (10) comprising:
- a first temperature probe (11) configured for measuring a first temperature (T₁) directly associated to a cooking medium (M) contained within the cooking vessel (R); and
- a second temperature probe (12) configured for measuring a second temperature (T₂) associated to a food (F), preferably associated to the central area or core thereof, which is dipped into the cooking medium (M).

According to the present embodiment, this is a portable appliance (1) especially intended for household use, being compact and easy to carry. Additionally, it is provided with a finishing featuring a great design and a glass surface being easy to clean. In this case, the induction hob (2) has a single light including a coil of about 2 kW, having a diameter of about 210 mm. Nevertheless, in other embodiments, the cooking appliance (1) could consist of a fixed induction cooker integrated onto a kitchen worktop, comprising an induction hob (2) with one or more lights, with the corresponding power (3) and control (4) units thereof. The temperature control device (10) is configured to communicate with the control unit (4), allowing the supplied electric power (E) to be regulated by the power unit (3) according to the values of the first and the second temperature (T₁, T₂), being measured during the cooking process. According to the first example, the temperature control device (10) is provided with an adapter (13) for the correct fastening thereof to a low height cooking vessel (R).

The cooking method which the cooking appliance (1) can carry out with comprises the following steps:
a) placing the cooking vessel (R) onto the induction hub (2) of the cooking appliance (1);
b) supplying the cooking vessel (R) with hot power (Q), wherein said heat power is obtained from the electric power (E) supplied by the power unit (3) to the induction hob (2);
c) measuring a first temperature (T₁) associated to the cooking medium contained within the cooking vessel (R), by means of the first temperature probe (11);
d) measuring a second temperature (T₂) associated to a food (F) dipped into the cooking medium (M), by means of the second temperature probe (11); and
e) regulating the heat power (Q) according to the values of the first and second temperature (T₁, T₂) by means of the control unit (4), wherein said values of the first and the second temperature (T₁, T₂) are wirelessly transmitted by the temperature control device (10) to the control unit (4).

In turn, step e) comprises the steps of:
e.1) introducing a set point temperature of the cooking medium (T_{1C}) in the cooking appliance (1) by means of the user interface (5);
e.2) introducing a food set point temperature (T_{2C}) in the cooking appliance (1), by means of the user interface (5);
e.3) comparing the first temperature (T₁) with the set point temperature of the cooking medium (Tic), by means of the control unit (4);
e.4) increasing the heat power (Q) until the first temperature (T₁) reaches the set point temperature value of the cooking medium (Tic), by means of the power unit (3);
e.5) adjusting the heat power (Q) for keeping the first temperature (T₁) stable in the set point temperature value of the cooking medium (Tic), by means of the power unit (3);
e.6) comparing the second temperature (T₂) with the set point temperature of the cooking medium (Tic), by means of the control unit (4); and
e.7) stopping heat power (Q) supply when the second temperature (T₂) reaches the value of the food set point temperature (T_{2C}).

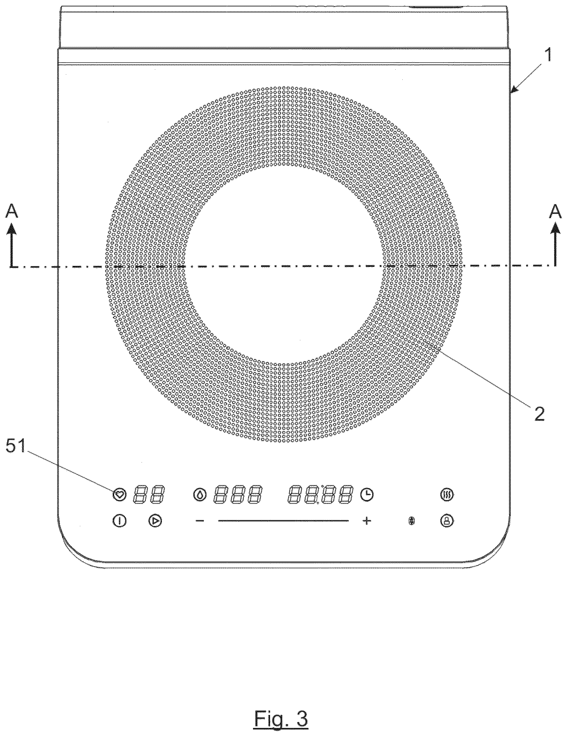

Figures 3 to 8 correspond to several views of the cooking appliance (1) without the cooking vessel (R), in order to better show the construction configuration and design details thereof.

As it can be seen in figure 3, the cooking appliance (1) is provided with a touch button panel (51) which allows the user to program the control unit (4), regulate power manually, visualize the state and/or operative mode, the different temperatures, the cooking time, etc.

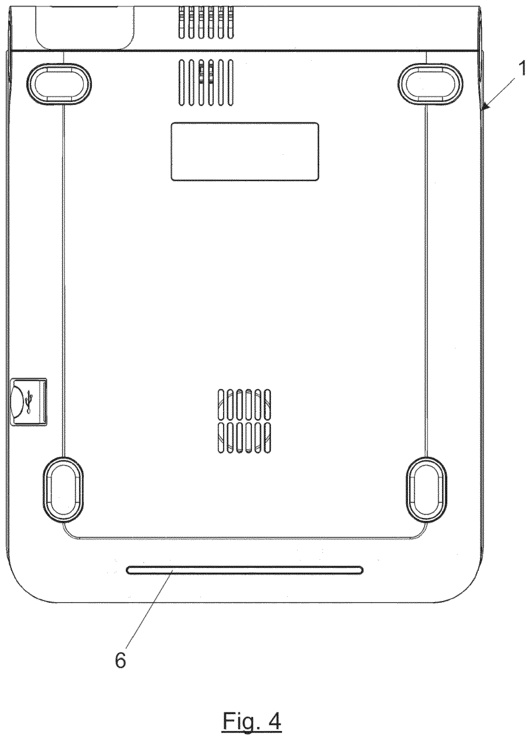

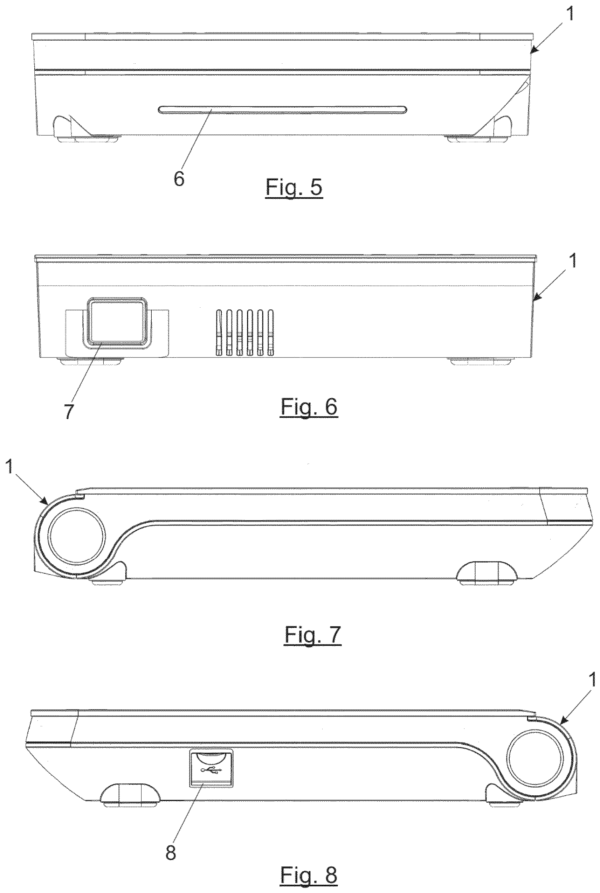

As it can be seen in figures 4 and 5, the cooking appliance (1) is provided with a light element (6) at the front side thereof, preferably formed by a strip of light emitting diodes (LEDs).

Figure 6 shows a power input (7) so as to allow connection of the appliance (1) to the electric power system.

Figure 8 shows a power input (8) so as to charge the battery of the temperature control device (10) from the cooking appliance (1) itself, or so as to connect the temperature control device (10) in those cases in which data transmission is performed by means of a physical communication through a wire,

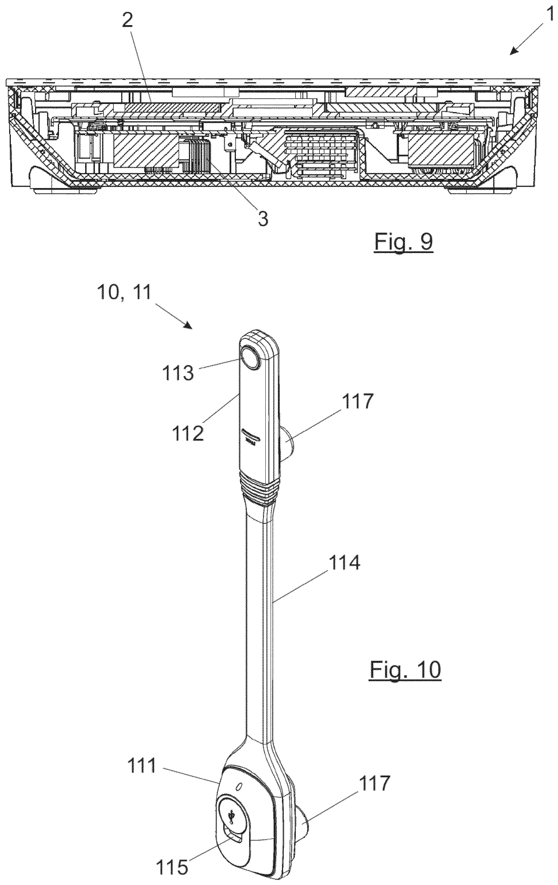

Figure 9 shows an inner view of the appliance (1), in which the power unit (3) of the induction hob (2) can be partly seen.

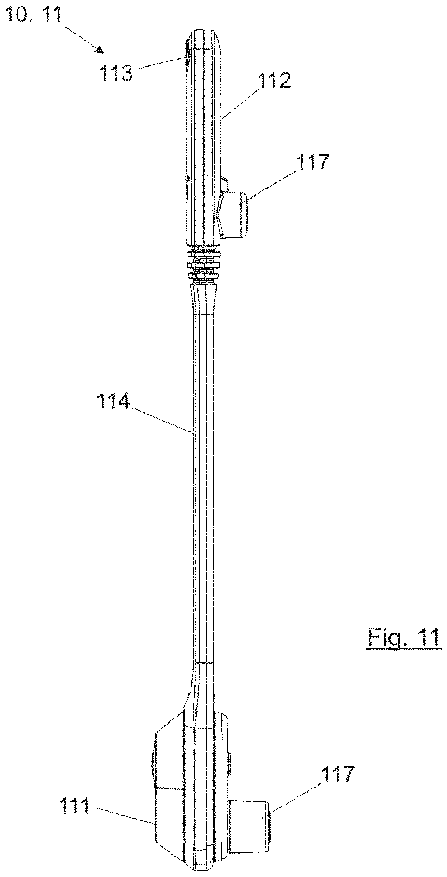

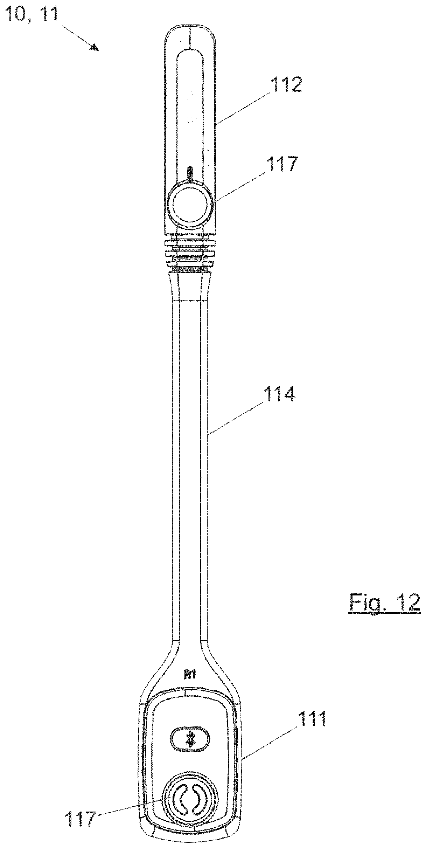

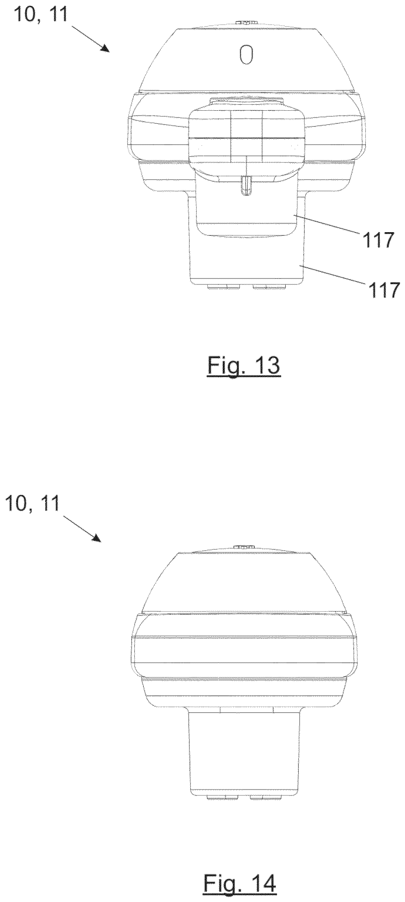

As it can be seen in figures 10 to 14, the first temperature probe (11) comprises:
- a fastening end (111) fitted to be fixed to the cooking vessel (R), and configured to establish a physical or wireless communication with the control unit (4);
- a first measuring end (112) having a first temperature sensor (113) configured to measure the first temperature (T₁); and
- a first intermediate section (114) that joins the first fastening end (111) with the first measuring end (112), and that is made of a semi-rigid material which enables it to match the cooking vessel (R) geometry.

The first temperature probe (11) comprises a connection port (115), in this case micro USB, which allows connection of the second temperature probe (12).

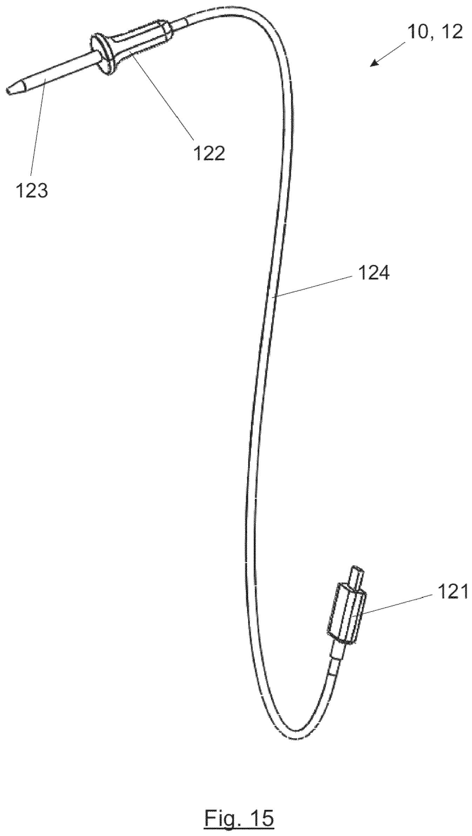

As it can be seen in figure 15, the second temperature probe (12) comprises:
- a connection end (121) fitted to connect to the first connection port (115) of the first temperature probe (11), by means of a USB or micro USB terminal;
- a second measuring end (122) having a second temperature sensor (123) configured to measure the second temperature (T₂); and
- a second intermediate section (124) joining the connection end (121) with the second measuring end (122), and that is made of a flexible or semi-rigid material which allows taking the second measuring end (122) up to the food (F) central area.

In order to make insertion of the second measuring end (122) into the food central area or core easier, the second temperature sensor (123) has a sharp-pointed shape configured for being stuck into the food (F).

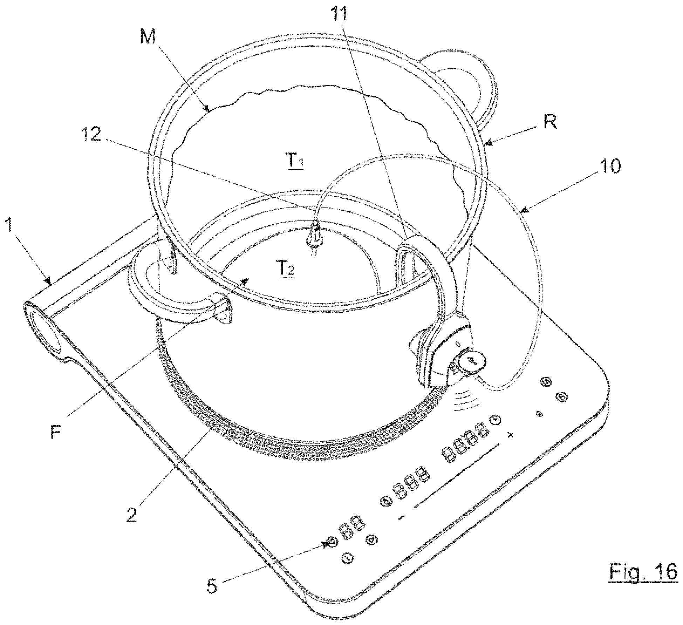

Figure 16 shows the cooking appliance (1) in operation with a cooking vessel (R) of a saucepan type. As it can be seen, in this case the temperature control device (10) does not require the adapter (13) for the correct fastening thereof to a cooking vessel (R), but it uses magnetic fastening means formed by two permanent magnets (117).

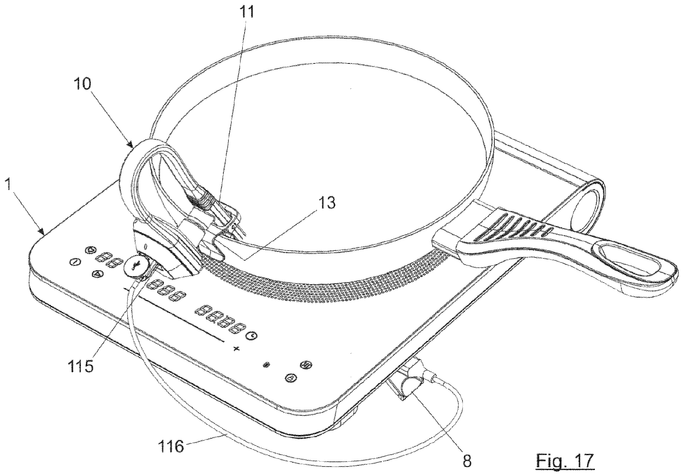

Figures 17 y 18 show two exemplary embodiments in which the temperature control device (10) is connected by means of a wiring (116) to the cooking appliance (1).

## Claims

1. - Cooking appliance, comprising:
• an induction hob (2) arranged for receiving a cooking vessel (R);
• a power unit (3) configured for supplying electric power (E) to the induction hob (2);
• a control unit (4) configured for regulating the electric power (E) being supplied by the power unit (3); and
• a temperature control device (10) configured for communicating with the control unit (4), allowing regulation of the electric power (E) being supplied by the power unit (3) according to the values of a first and second temperature (T₁, T₂), comprising a first temperature probe (11) fitted to be fixed to the cooking vessel (R) and having a first temperature sensor (113) configured for measuring a first temperature (T₁) directly associated to a cooking medium (M) contained within the cooking vessel (R), wherein the first temperature sensor (113) is configured for being submerged into the cooking medium (M);
said appliance (1) being **characterized in that** the temperature control device (10) further comprises a second temperature probe (12) having a second temperature sensor (123) configured for measuring a second temperature (T₂) directly associated to a food (F) which is dipped into the cooking medium (M), wherein the second temperature sensor (123) is configured for being stuck into the food (F).

2. - Cooking appliance according to claim 1, **characterized in that** the control unit (4) can be programmed by means of a user interface (5), allowing the user to introduce a set point temperature of the cooking medium (T_{1C}) and a food set point temperature (T_{2C}).

3. - Cooking appliance according to claim 2, **characterized in that** the user interface (5) allows programming the control unit (4) from a button panel (51) arranged in the appliance (1) itself, or from a smartphone or tablet by means of a mobile APP.

4. - Cooking appliance according to any of claims 1 to 3, **characterized in that** the temperature control device (10) features wireless communication with the control unit (4).

5. - Cooking appliance according to any of claims 1 to 4, **characterized in that** the first temperature probe (11) comprises:
• a fastening end (111) fitted to be fixed to the cooking vessel (R), and configured to establish a physical or wireless communication with the control unit (4);
• a first measuring end (112) having the first temperature sensor (113); and
• a first intermediate section (114) that joins the first fastening end (111) with the first measuring end (112), and that is made of a semi-rigid material which enables it to match the cooking vessel (R) geometry.

6. - Cooking appliance according to any of claims 1 to 5, **characterized in that** the first temperature probe (11) comprises a connection port (115) which allows connection of the second temperature probe (12).

7. - Cooking appliance according to any of claims 1 to 6, **characterized in that** the second temperature probe (12) comprises:
• a connection end (121) fitted to connect to the first temperature probe (11);
• a second measuring end (122) having the second temperature sensor (123); and
• a second intermediate section (124) joining the connection end (121) with the second measuring end (122), and that is made of a flexible or semi-rigid material which allows taking the second measuring end (122) up to the food (F) central area.

8. - Cooking method comprising the following steps:
a) placing the cooking vessel (R) onto a cooking appliance (1) according to any of claims 1 to 7; and
b) supplying the cooking vessel (R) with hot power,
c) measuring a first temperature (T₁) directly associated to the cooking medium contained within the cooking vessel (R);
d) measuring a second temperature (T₂) directly associated to a food (F) dipped into the cooking medium (M); and
e) regulating the heat power (Q) according to the values of the first and second temperature (T₁, T₂);
wherein the step e) comprises the steps of:
e.1) introducing a set point temperature of the cooking medium (T_{1C}) in the cooking appliance (1);
e.2) introducing a food set point temperature (T_{2C}) in the cooking appliance (1);
e.3) comparing the first temperature (T₁) with the set point temperature of the cooking medium (Tic);
e.4) increasing the heat power until the first temperature (T₁) reaches the set point temperature value of the cooking medium (Tic);
e.5) adjusting the heat power for keeping the first temperature (T₁) stable in the set point temperature value of the cooking medium (Tic);
e.6) comparing the second temperature (T₂) with the set point temperature of the cooking medium (Tic); and
e.7) stopping heat power supply when the second temperature (T₂) reaches the value of the food set point temperature (T_{2C}).

9. - Temperature control device for cooking appliances, comprising a first temperature probe (11) having a first temperature sensor (113) configured for measuring a first temperature (T₁) directly associated to a cooking medium (M) contained within the cooking vessel (R), wherein the first temperature sensor (113) is configured for being submerged into the cooking medium (M); wherein said temperature control device (10) further comprises a second temperature probe (12) having a second temperature sensor (123) configured for measuring a second temperature (T₂) associated to a food (F) which is dipped into the cooking medium (M), wherein the second temperature sensor (123) is configured for being stuck into the food (F); and wherein said temperature control device (10) is configured for communicating with the cooking appliance (1); **characterized in that** the first temperature probe (11) is fitted to be fixed to the cooking vessel (R).

10. - Temperature control device for cooking appliances according to claim 9, **characterized in that** the first temperature probe (11) comprises:
• a fastening end (111) fitted to be fixed to the cooking vessel (R), and configured to establish a physical or wireless communication with the cooking appliance (1);
• a first measuring end (112) having the first temperature sensor (113); and
• a first intermediate section (114) that joins the first fastening end (111) with the first measuring end (112), and that is made of a semi-rigid material which enables it to match the cooking vessel (R) geometry.

11. Temperature control device for cooking appliances according to any of claims 9 to 10, **characterized in that** the first temperature probe (11) comprises a connection port (115) enabling to establish a physical communication by means of a wiring (116) with the cooking appliance (1).

12. - Temperature control device for cooking appliances according to any of claims 9 to 11, **characterized in that** the second temperature probe (12) comprises:
• a connection end (121) fitted to connect to the first temperature probe (11);
• a second measuring end (122) having the second temperature sensor (123); and
• a second intermediate section (124) joining the connection end (121) with the second measuring end (122), and that is made of a flexible or semi-rigid material which allows taking the second measuring end (122) up to the central area of the cooking vessel (R).

## Patentansprüche

1. Kochgerät, umfassend:
• ein Induktionskochfeld (2), das zur Aufnahme eines Kochgefäßes (R) geeignet ist;
• eine Leistungseinheit (3), die zur Versorgung des Induktionskochfeldes (2) mit elektrischer Energie (E) ausgelegt ist;
• eine Steuereinheit (4), die zur Regelung der von der Leistungseinheit (3) gelieferten elektrischen Energie (E) ausgelegt ist; und
• eine Temperaturregelvorrichtung (10), die zur Kommunikation mit der Steuereinheit (4) ausgelegt ist und die Regelung der von der Leistungseinheit (3) gelieferten elektrischen Energie (E) in Abhängigkeit von den Werten einer ersten und zweiten Temperatur (T₁, T₂) ermöglicht, umfassend eine zur Befestigung am Kochgefäß (R) vorgesehene erste Temperatursonde (11) mit einem ersten Temperatursensor (113) zum Messen einer ersten Temperatur (T₁), die direkt einem in dem Kochgefäß (R) enthaltenen Kochmedium (M) zugehörig ist, wobei der erste Temperatursensor (113) zum Eintauchen in das Kochmedium (M) ausgelegt ist;
wobei das genannte Gerät (1) **dadurch gekennzeichnet ist, dass** die Temperaturregelvorrichtung (10) ferner eine zweite Temperatursonde (12) mit einem zweiten Temperatursensor (123) zum Messen einer zweiten Temperatur (T₂) umfasst, die direkt einem in das Kochmedium (M) eingetauchten Nahrungsmittel (F) zugehörig ist, wobei der zweite Temperatursensor (123) zum Einstecken in das Nahrungsmittel (F) ausgelegt ist.

2. Kochgerät nach Anspruch 1, **dadurch gekennzeichnet, dass** die Steuereinheit (4) über eine Benutzerschnittstelle (5), die dem Benutzer die Eingabe einer Solltemperatur für das Kochmedium (T_{1C}) und einer Solltemperatur für das Nahrungsmittel (T_{2C}) ermöglicht, programmiert werden kann.

3. Kochgerät nach Anspruch 2, **dadurch gekennzeichnet, dass** die Benutzerschnittstelle (5) die Programmierung der Steuereinheit (4) über ein am Gerät (1) selbst angeordnetes Tastenfeld (51) oder mittels einer mobilen APP von einem Smartphone oder Tablet aus ermöglicht.

4. Kochgerät nach einem der Ansprüche 1 bis 3, **dadurch gekennzeichnet, dass** die Temperaturregelvorrichtung (10) eine drahtlose Kommunikation mit der Steuereinheit (4) aufweist.

5. Kochgerät nach einem der Ansprüche 1 bis 4, **dadurch gekennzeichnet, dass** die erste Temperatursonde (11) Folgendes umfasst:
• ein zur Befestigung am Kochgefäß (R) vorgesehenes Befestigungsende (111), das zur Herstellung einer physischen oder drahtlosen Kommunikation mit der Steuereinheit (4) ausgelegt ist;
• ein erstes Messende (112), an dem sich der erste Temperatursensor (113) befindet; und
• einen ersten Zwischenbereich (114), der das erste Befestigungsende (111) mit dem ersten Messende (112) verbindet und aus einem halbstarren Material besteht, das seine Anpassung an die Geometrie des Kochgefäßes (R) ermöglicht.

6. Kochgerät nach einem der Ansprüche 1 bis 5, **dadurch gekennzeichnet, dass** die erste Temperatursonde (11) eine Anschlussbuchse (115) aufweist, die den Anschluss der zweiten Temperatursonde (12) ermöglicht.

7. Kochgerät nach einem der Ansprüche 1 bis 6, **dadurch gekennzeichnet, dass** die zweite Temperatursonde (12) Folgendes umfasst:
• ein zum Anschluss an die erste Temperatursonde (11) vorgesehenes Anschlussende (121);
• ein zweites Messende (122), an dem sich der zweite Temperatursensor (123) befindet; und
• einen zweiten Zwischenbereich (124), der das Anschlussende (121) mit dem zweiten Messende (122) verbindet und aus einem flexiblen oder halbstarren Material besteht, das das Einführen des zweiten Messendes (122) in den zentralen Bereich des Nahrungsmittels (F) ermöglicht.

8. Kochverfahren, das die folgenden Schritte umfasst:
a) Aufsetzen des Kochgefäßes (R) auf ein Kochgerät (1) nach einem der Ansprüche 1 bis 7; und
b) Versorgen des Kochgefäßes (R) mit Wärmeenergie,
c) Messen einer ersten Temperatur (T₁), die direkt dem im Kochgefäß (R) enthaltenen Kochmedium zugehörig ist;
d) Messen einer zweiten Temperatur (T₂), die direkt dem in das Kochmedium (M) eingetauchten Nahrungsmittel (F) zugehörig ist; und
e) Anpassen der Wärmeenergie (Q) in Abhängigkeit von den Werten der ersten und zweiten Temperatur (T₁, T₂);
wobei Schritt e) die folgenden Schritte umfasst:
e.1) Eingeben einer Solltemperatur für das Kochmedium (T_{1C}) am Kochgerät (1);
e.2) Eingeben einer Solltemperatur für das Nahrungsmittel (T_{2C}) am Kochgerät (1);
e.3) Vergleichen der ersten Temperatur (T₁) mit der Solltemperatur des Kochmediums (T_{1C});
e.4) Erhöhen der Wärmeenergie, bis die erste Temperatur (T₁) den Solltemperaturwert des Kochmediums (T_{1C}) erreicht;
e.5) Regulieren der Wärmeenergie, um die erste Temperatur (T₁) konstant auf dem Temperatursollwert des Kochmediums (T_{1C}) zu halten;
e.6) Vergleichen der zweiten Temperatur (T₂) mit der Solltemperatur des Kochmediums (T_{1C}); und
e.7) Unterbrechen der Wärmeenergiezufuhr, wenn die zweite Temperatur (T₂) den Solltemperaturwert des Nahrungsmittels (T_{2C}) erreicht.

9. Temperaturregelvorrichtung für Kochgeräte, umfassend eine erste Temperatursonde (11) mit einem ersten Temperatursensor (113) zum Messen einer direkt einem Kochmedium (M) im Kochgefäß (R) zugehörigen ersten Temperatur (T₁), wobei der erste Temperatursensor (113) zum Eintauchen in das Kochmedium (M) ausgelegt ist; wobei die genannte Temperaturregelvorrichtung (10) ferner eine zweite Temperatursonde (12) mit einem zweiten Temperatursensor (123) umfasst, der zum Messen der einem in das Kochmedium (M) eingetauchten Nahrungsmittel (F) zugehörigen zweiten Temperatur (T₂) ausgelegt ist, wobei der zweite Temperatursensor (123) zum Einstecken in das Nahrungsmittel (F) ausgelegt ist; und wobei die genannte Temperaturregelvorrichtung (10) zum Kommunizieren mit dem Kochgerät (1) ausgelegt ist; **dadurch gekennzeichnet, dass** die erste Temperatursonde (11) zur Befestigung am Kochgefäß (R) vorgesehen ist.

10. Temperaturregelvorrichtung für Kochgeräte nach Anspruch 9, **dadurch gekennzeichnet, dass** die erste Temperatursonde (11) Folgendes umfasst:
• ein zur Befestigung am Kochgefäß (R) vorgesehenes Befestigungsende (111), das zur Herstellung einer physischen oder drahtlosen Kommunikation mit dem Kochgerät (1) ausgelegt ist;
• ein erstes Messende (112), an dem sich der erste Temperatursensor (113) befindet; und
• einen ersten Zwischenbereich (114), der das erste Befestigungsende (111) mit dem ersten Messende (112) verbindet und aus einem halbstarren Material besteht, das seine Anpassung an die Geometrie des Kochgefäßes (R) ermöglicht.

11. Temperaturregelvorrichtung für Kochgeräte nach den Ansprüchen 9 bis 10, **dadurch gekennzeichnet, dass** die erste Temperatursonde (11) eine Anschlussbuchse (115) aufweist, die mittels einer Verdrahtung (116) die Herstellung einer physischen Verbindung mit dem Kochgerät (1) ermöglicht.

12. Temperaturregelvorrichtung für Kochgeräte nach den Ansprüchen 9 bis 11, **dadurch gekennzeichnet, dass** die zweite Temperatursonde (12) Folgendes umfasst:
• ein zum Anschluss an die erste Temperatursonde (11) vorgesehenes Anschlussende (121);
• ein zweites Messende (122), an dem sich der zweite Temperatursensor (123) befindet; und
• einen zweiten Zwischenbereich (124), der das Anschlussende (121) mit dem zweiten Messende (122) verbindet und aus einem flexiblen oder halbstarren Material besteht, das das Einführen des zweiten Messendes (122) in den zentralen Bereich des Kochgerät (1) ermöglicht.

## Revendications

1. Appareil de cuisson, comprenant :
• une plaque à induction (2) agencée pour recevoir un récipient de cuisson (R) ;
• une unité d'alimentation (3) configurée pour fournir de l'énergie électrique (E) à la plaque à induction (2) ;
• une unité de commande (4) configurée pour réguler l'énergie électrique (E) fournie par l'unité de puissance (3) ; et
• un dispositif de contrôle de la température (10) configuré pour communiquer avec l'unité de contrôle (4), permettant de réguler l'énergie électrique (E) fournie par l'unité de puissance (3) en fonction des valeurs d'une première et d'une seconde température (T₁, T₂), comprenant une première sonde de température (11) adaptée pour être fixée au récipient de cuisson (R) et ayant un premier capteur de température (113) configuré pour mesurer une première température (T₁) directement associée à un milieu de cuisson (M) contenu dans le récipient de cuisson (R), dans lequel le premier capteur de température (113) est configuré pour être immergé dans le milieu de cuisson (M) ;
ledit appareil (1) étant **caractérisé en ce que** le dispositif de contrôle de température (10) comprend en outre une deuxième sonde de température (12) ayant un deuxième capteur de température (123) configuré pour mesurer une deuxième température (T₂) directement associée à un aliment (F) qui est plongé dans le milieu de cuisson (M), dans lequel le deuxième capteur de température (123) est configuré pour être collé dans l'aliment (F).

2. Appareil de cuisson selon la revendication 1, **caractérisé en ce que** l'unité de commande (4) peut être programmée au moyen d'une interface utilisateur (5), permettant à l'utilisateur d'introduire une température de consigne du milieu de cuisson (T_{1C}) et une température de consigne de l'aliment (T_{2C}).

3. Appareil de cuisson selon la revendication 2, **caractérisé en ce que** l'interface utilisateur (5) permet de programmer l'unité de commande (4) à partir d'un panneau de boutons (51) disposé dans l'appareil (1) lui-même, ou à partir d'un smartphone ou d'une tablette au moyen d'une APP mobile.

4. Appareil de cuisson selon l'une quelconque des revendications 1 à 3, **caractérisé en ce que** le dispositif de contrôle de la température (10) présente une communication sans fil avec l'unité de commande (4).

5. Appareil de cuisson selon l'une quelconque des revendications 1 à 4, **caractérisé en ce que** la première sonde de température (11) comprend :
• une extrémité de fixation (111) adaptée pour être fixée sur le récipient de cuisson (R), et configurée pour établir une communication physique ou sans fil avec l'unité de commande (4) ;
• une première extrémité de mesure (112) comportant le premier capteur de température (113) ; et
• une première section intermédiaire (114) qui relie la première extrémité de fixation (111) à la première extrémité de mesure (112), et qui est faite d'un matériau semi-rigide qui lui permet de s'adapter à la géométrie du récipient de cuisson (R).

6. Appareil de cuisson selon l'une quelconque des revendications 1 à 5, **caractérisé en ce que** la première sonde de température (11) comprend un orifice de raccordement (115) qui permet le raccordement de la deuxième sonde de température (12).

7. Appareil de cuisson selon l'une quelconque des revendications 1 à 6, **caractérisé en ce que** la deuxième sonde de température (12) comprend :
• une extrémité de raccordement (121) adaptée pour se connecter à la première sonde de température (11) ;
• une deuxième extrémité de mesure (122) comportant le deuxième capteur de température (123) ; et
• une deuxième section intermédiaire (124) reliant l'extrémité de connexion (121) à la deuxième extrémité de mesure (122), et qui est faite d'un matériau flexible ou semi-rigide qui permet d'amener la deuxième extrémité de mesure (122) jusqu'à la zone centrale de l'aliment (F).

8. Procédé de cuisson comprenant les étapes suivantes :
a) placer le récipient de cuisson (R) sur un appareil de cuisson (1) selon l'une quelconque des revendications 1 à 7 ; et
b) alimenter le récipient de cuisson (R) en énergie chaude,
c) mesurer une première température (T₁) directement associée au milieu de cuisson contenu dans le récipient de cuisson (R) ;
d) mesurer une deuxième température (T₂) directement associée à un aliment (F) plongé dans le milieu de cuisson (M) ; et
e) réguler la puissance thermique (Q) en fonction des valeurs de la première et de la seconde température (T₁, T₂) ;
dans lequel l'étape e) comprend les étapes consistant à :
e.1) introduire une température de consigne du milieu de cuisson (T_{1C}) dans l'appareil de cuisson (1) ;
e.2) introduire une température de consigne de l'aliment (T_{2C}) dans l'appareil de cuisson (1) ;
e.3) comparer la première température (T₁) avec la température de consigne du milieu de cuisson (T_{1C}) ;
e.4) augmenter la puissance thermique jusqu'à ce que la première température (T₁) atteigne la valeur de consigne de la température du milieu de cuisson (T_{1C}) ;
e.5) ajuster la puissance thermique pour maintenir la première température (T₁) stable dans la valeur de température de consigne du milieu de cuisson (T_{1C}) ;
e.6) comparer la deuxième température (T₂) avec la température de consigne du milieu de cuisson (T_{1C}) ; et
e.7) arrêter l'alimentation en énergie thermique lorsque la deuxième température (T₂) atteint la valeur de la température de consigne de l'aliment (T_{2C}).

9. Dispositif de contrôle de température pour appareils de cuisson, comprenant une première sonde de température (11) ayant un premier capteur de température (113) configuré pour mesurer une première température (T₁) directement associée à un milieu de cuisson (M) contenu dans le récipient de cuisson (R), dans lequel le premier capteur de température (113) est configuré pour être immergé dans le milieu de cuisson (M) ; dans lequel ledit dispositif de contrôle de température (10) comprend en outre une seconde sonde de température (12) ayant un second capteur de température (123) configuré pour mesurer une seconde température (T₂) associée à un aliment (F) qui est plongé dans le milieu de cuisson (M), dans lequel le second capteur de température (123) est configuré pour être collé dans l'aliment (F) ; et dans lequel ledit dispositif de contrôle de température (10) est configuré pour communiquer avec l'appareil de cuisson (1) ; **caractérisé en ce que** la première sonde de température (11) est adaptée pour être fixée au récipient de cuisson (R).

10. Dispositif de régulation de température pour appareil de cuisson selon la revendication 9, **caractérisé en ce que** la première sonde de température (11) comprend :
• une extrémité de fixation (111) adaptée pour être fixée sur le récipient de cuisson (R), et configurée pour établir une communication physique ou sans fil avec l'appareil de cuisson (1) ;
• une première extrémité de mesure (112) comportant le premier capteur de température (113) ; et
• une première section intermédiaire (114) qui relie la première extrémité de fixation (111) à la première extrémité de mesure (112), et qui est faite d'un matériau semi-rigide qui lui permet de s'adapter à la géométrie du récipient de cuisson (R).

11. Dispositif de régulation de température pour appareil de cuisson selon l'une quelconque des revendications 9 à 10, **caractérisé en ce que** la première sonde de température (11) comprend un port de connexion (115) permettant d'établir une communication physique au moyen d'un câblage (116) avec l'appareil de cuisson (1).

12. Dispositif de régulation de température pour appareil de cuisson selon l'une quelconque des revendications 9 à 11, **caractérisé en ce que** la deuxième sonde de température (12) comprend :
• une extrémité de raccordement (121) adaptée pour se connecter à la première sonde de température (11) ;
• une deuxième extrémité de mesure (122) comportant le deuxième capteur de température (123) ; et
• une deuxième section intermédiaire (124) reliant l'extrémité de connexion (121) à la deuxième extrémité de mesure (122), et qui est faite d'un matériau flexible ou semi-rigide qui permet d'amener la deuxième extrémité de mesure (122) jusqu'à la zone centrale du récipient de cuisson (R).
